# EUROPEAN PATENT APPLICATION

(11) **EP 2 050 662 A1**
(43) Date of publication of application: **22.04.2009**
(21) Application number: 07020374.0
(22) Date of filing: 18.10.2007
(51) Int. Cl.: B62D 35/00, B62D 37/02

(54) **Body for a motor vehicle**

(71) Applicant: GM Global Technology Operations, Inc., Detroit, MI 48265-3000 (US)
(72) Inventor: Danielsson, Hakan, 46142 Trollhättan (SE); Lundström, Jesper, 46242 Vänersborg (SE); Sandén, Ulf, 46142 Trollhättan (SE)
(74) Representative: Daniel, Ulrich W.P.

(57) **Abstract**

A body 10 for a motor vehicle 12 is provided, which comprises a spoiler part 16 for providing an aerodynamic effect movable connected to the body 10. According to the invention the at least one spoiler part 16 comprises a spoiler element 18 movable connected to the spoiler part 16. Thus, a body 10 for a motor vehicle 12 is provided, which provides a greater aerodynamic effect without increasing the volume of the spoiler 14 with respect to the provided aerodynamic effect.

## Description

The invention relates to a body for a motor vehicle, by which spoilers may be provided.

For example from US 2005/0077753 A1 a body for a motor vehicle is known, which comprises a spoiler movable connected to the body. Depending on the position of the spoiler relative to body a stabilizing or braking aerodynamic effect is provided.

It is a disadvantage of such kind of a body that the spoiler is big in comparison to the aerodynamic effect provided by the spoiler.

It is the object of the present invention to provide a body for a motor vehicle, which provides a greater aerodynamic effect without increasing the volume of the spoiler with respect to the provided aerodynamic effect.

This object is achieved by the features of claim 1. Preferred embodiments are given by the dependent claims.

The body for a motor vehicle according to the invention comprises a spoiler part for providing an aerodynamic effect movable connected to the body. According to the invention the at least one spoiler part comprises a spoiler element movable connected to the spoiler part.

Due to the at least one spoiler element an aerodynamic active surface may be assembled by several parts movable connected to each other, for example by unfolding at least one or more spoiler elements from the spoiler part. For instance a spoiler may be provided, which is significant broader or smaller than the width of the body at will. Thus, it is possible to use the same volume of the spoiler to provide a larger one, so that due to the increased aerodynamic active surface a very great aerodynamic effect may be provided. This leads to a smaller spoiler in comparison to the aerodynamic effect provided by the spoiler. Thus, a body for a motor vehicle is provided, which provides a greater aerodynamic effect without increasing the volume of the spoiler. Depending on the position of the spoiler part relative to the body and the position of the spoiler elements relative to the spoiler part it is even possible to provide different aerodynamic effects at the same time at will. For example the spoiler part may provide depending on its position a stabilizing or braking effect, whereby the spoiler element may provide depending on its position a vortex generating or a down force providing effect.

Preferably the spoiler element is movable between a rest position, in which the spoiler element is received by the spoiler part, and a use position, in which the spoiler element provides an aerodynamic effect. In the rest position the spoiler element may provide a part of the aerodynamic active surface of the spoiler part. Particularly the aerodynamic effect of the spoiler element provided in the use position is mainly prevented in the rest position. Thus, it is possible to switch on and off the aerodynamic effect of the spoiler element at will.

Particularly the spoiler part is movable between a cover position, in which the spoiler part is received by the body, and an expose position, in which the spoiler part provides an aerodynamic effect. Particularly the aerodynamic effect of the spoiler part provided in the expose position is mainly prevented in the cover position. Thus, it is possible to switch on and off the aerodynamic effect of the spoiler part at will. Preferably the spoiler element is still movable in the cover position of the spoiler part, so that it is possible to provide only the aerodynamic effect of the spoiler:element at will.

Preferably the spoiler part and/or the spoiler element are in alignment with an adjacent outer surface of the body in the cover position of the spoiler part. Due to the alignment of the spoiler part and/or the spoiler element to the surface of the body the aerodynamic effect provided by the spoiler part and/or the spoiler element may be mainly completely deactivated. Further the appearance of the body may be smoother in the cover position and/or the rest position, so that an attractive look of the motor vehicle may be provided as well as safe and good driving conditions.

In a preferred embodiment the position of the spoiler element is particularly automatic adaptable to the position of the spoiler part. An embodiment of the present invention is possible, where it could be favourable to move the spoiler element a longer or smaller distance relative to the spoiler part depending on the position of the spoiler part for providing an optimized intended aerodynamic effect of the spoiler element and/or the spoiler part.

Particularly the spoiler part and/or the spoiler element comprises at least one further spoiler element movable connected to the spoiler part or the spoiler element, respectively. Thus it is possible to provide several spoiler elements connected in series and/or in parallel. The ratio of the aerodynamic effect to the spoiler volume may be further increased.

Preferably the spoiler part comprises several spoiler elements and/or the body comprises several spoiler parts, wherein the several spoiler elements and/or the several spoiler parts are independently movable to each other. This leads to an increased functionality of the body. For instance it is possible to provide different positions for different spoiler parts and/or spoiler elements at the left side and the right side of the body, when the motor vehicle is moving along a curve or turn. Thus, an increased driving stability is provided.

The spoiler part and/or the spoiler element may be linear movable and/or pivotable. Particularly the spoiler element is linear moveable inside the spoiler part by means of a lug guided in a groove. Due to the linear guidance the spoiler part may be elongated by means of the spoiler element at will. Moreover it is possible to actuate the spoiler element by means of a gear mechanism comprising a worm gear, a pinion and/or bevel drives or the like. By means of the gear mechanism a direct coupling of the movement of the spoiler element to the movement of the spoiler part may be provided.

In a preferred embodiment between the spoiler part and the body and/or between the spoiler part and the spoiler element a damping element, particularly a rubber-like material, is provided. Due to the damping element driving noise is reduced. Further a rattle of the spoiler element and/or the spoiler part is prevented leading to a reduced wear. Moreover the actuating and stopping of the spoiler part and/or the spoiler element by means of an actuator, like an electric motor is smoother and softer. A hard stop or the like may be prevented.

The spoiler part may be provided at a roof part of the body and/or at a trunk of the body and/ or at a tailgate of the body, particularly for providing a braking force, a down force, a stabilisation or a vortex. Depending on the position of the spoiler part and the spoiler element it may be favourable to provide a specific aerodynamic effect. For instance a spoiler part arranged at the roof of the body may provide a down force at a first expose position and a braking force at a seconded expose position, which may be provided by turning the spoiler part by mainly 90°±20°. In the case that the spoiler part is arranged at the trunk and/or the tailgate of the body the spoiler part and/or the spoiler element may provide an increased driving stability, since a vehicle drag due to air resistance at high speed is reduced and an improved stabilisation is provided. Further vortices may be generated, be which a soiling of a rear window due to a dirty turbulent recirculation flow may be prevented or at least reduced.

These and other aspects of the invention will be apparent from preferred embodiments of the invention described hereinafter with reference to attached figures by way of example.

In the figures:
- Fig. 1: is a schematic perspective view of a body in a first embodiment;
- Fig. 2: is a schematic perspective view of the body in a second embodiment;
- Fig. 3: is a schematic perspective exploded view of a detail of the body of fig. 1;
- Fig. 4: is a schematic sectional view of fig. 3;
- Fig. 5: is a schematic sectional front view of fig. 3; and
- Fig. 6: is a schematic perspective view of the body in a third embodiment.

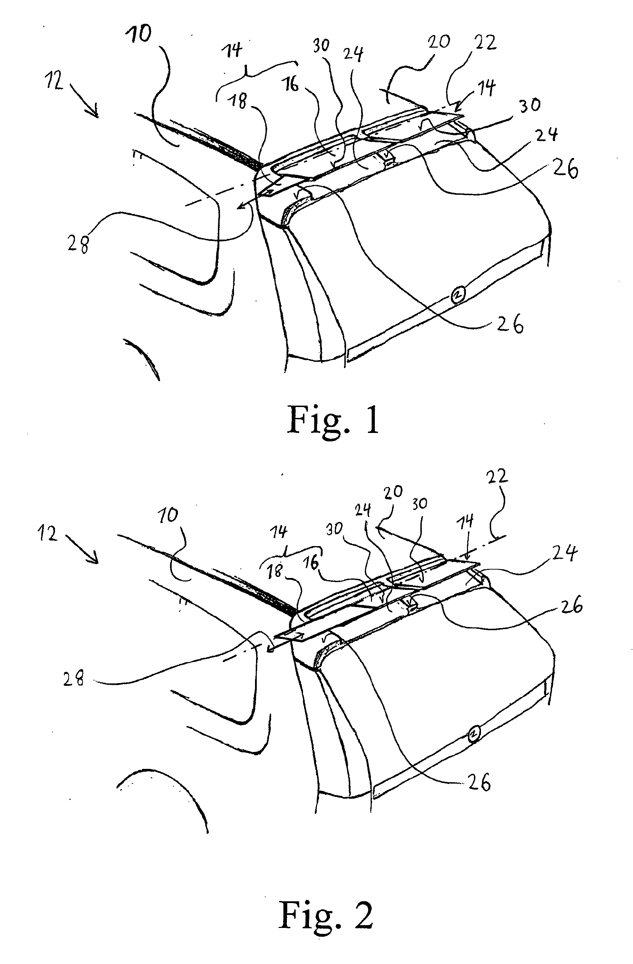

The body 10 of a motor vehicle 12 illustrated in Fig. 1 comprises a spoiler 14, which comprises a spoiler part 16 movable connected to the body 10, wherein the spoiler part 16 itself comprises a spoiler element 18 movable connected to the spoiler part 16. In the illustrated embodiment the spoiler part 16 is pivotable connected to a roof 20 around a pivot axis 22. In the illustrated embodiment two spoilers 14 are provided, wherein each spoiler part 16 of the spoilers 14 are pivotable around the same pivot axis 22. Both spoilers 14 as well as their spoiler parts 16 and their spoiler elements 18 are independently to each other movable.

The body 10 comprises a recess 24 for each spoiler 14, so that the spoiler part 16 is arranged in alignment with an adjacent outer surface 26 of the body 10 in a cover position, where the spoiler 14 is received by the recess 24. In an exposed position of the spoiler part 16, as illustrated, the spoiler part 16 may provide a down force at a higher speed of the motor vehicle 12.

The spoiler element 18 is linear movable along an arrow 28 with respect to the spoiler part 16. The spoiler element 18 is independently movable with respect to the spoiler part 16. When the spoiler element 18 is moved from a rest position, where the spoiler element 18 is received by the spoiler part 16, to a use position, as illustrated, an aerodynamic active surface 30 of the spoiler 14 is increased without increasing the volume of the spoiler 14.

In a second embodiment as illustrated in Fig. 2 the spoiler part 16 and the spoiler element 18 are designed in contrast to the embodiment of Fig. 1 as two sheets arranged one upon the other. This means that in the rest position of the spoiler element 18 the spoiler element 18 is not fully received by the spoiler part 16 but may still provide at least a part of the aerodynamic active surface 30.

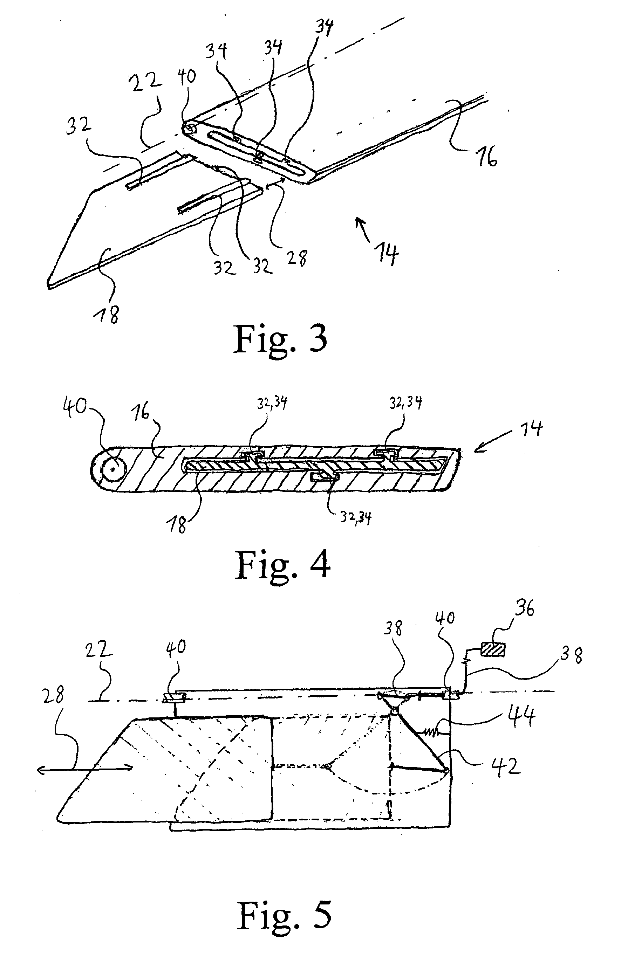

As illustrated in Fig. 3 the spoiler element 18 may be guided by the spoiler part 16 by means of lugs 32 guided in a corresponding groove 34. The lugs 32 and the grooves 34 may be for example designed as dovetail or T-like (Fig. 4). Between the lug 32 and the grove 34 a not illustrated rubber like damping element may be provided for reducing driving noise and the like.

In order to actuate the spoiler element 18 with respect to the spoiler part 16 several different solutions are possible. By way of example in Fig. 5 it is illustrated that a motor 36 actuates a cable 38 guided through a pivot pin 38 of the spoiler part. When the cable 38 is drawn in by the motor 36 a lever 42 is pivoted to move the spoiler element 28 outwards along the arrow 28. The lever 42 is spring-loaded by a spring 44, so that the spoiler element 18 is moved inwards automatically, when no force is applied to the cable 38 by the motor 36.

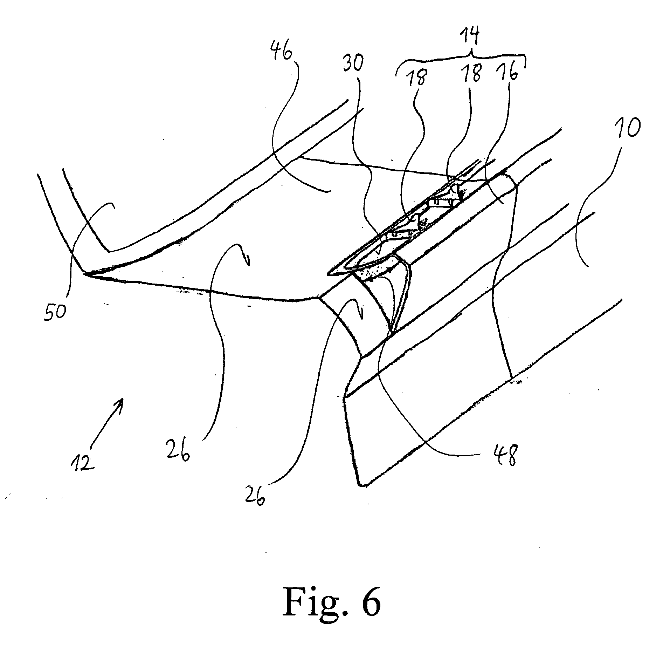

In a third embodiment illustrated in Fig. 6 additionally or in the alternate the spoiler 14 is provided at a tailgate 46 of a trunk. The spoiler part 16 is pivotable along an arrow 48. In the exposed position, as illustrated, several spoiler elements 18 may be unfold from the aerodynamic active surface 30 of the spoiler part 16. Due to the design of the spoiler part 16 and the spoiler elements 18 a rear window 50 is prevented from being soiled due to a dirty turbulent recirculation flow increasing driving safety. A comparable effect may be provided by a spoiler 14 comprising spoiler elements 18 used as vortex generators at the top of the hatch back or on the roof 20.

### list of reference signs

- 10: body
- 12: motor vehicle
- 14: spoiler
- 16: spoiler part
- 18: spoiler element
- 20: roof
- 22: pivot axis
- 24: recess
- 26: adjacent outer surface
- 28: arrow
- 30: aerodynamic active surface
- 32: lug
- 34: groove
- 36: motor
- 38: cable
- 40: pivot pin
- 42: lever
- 44: spring
- 46: tailgate
- 48: arrow
- 50: rear window

## Claims

1. Body for a motor vehicle (12), comprising
a spoiler part (16) for providing an aerodynamic effect movable connected to the body (10)
**characterized in that**
the spoiler part (16) comprises a spoiler element (18) movable connected to the spoiler part (16).

2. Body according to claim 1, wherein the spoiler element (18) is movable between a rest position, in which the spoiler element (18) is received by the spoiler part (16), and a use position, in which the spoiler element (18) provides an aerodynamic effect.

3. Body according to claim 1 or 3, wherein the spoiler part (16) is movable between a cover position, in which the spoiler part (16) is received by the body (10), and an expose position, in which the spoiler part (16) provides an aerodynamic effect.

4. Body according to claim 3, wherein the spoiler part (16) and/or the spoiler element (18) are in alignment with an adjacent outer surface (26) of the body (10) in the cover position of the spoiler part (16).

5. Body according to anyone of claims 1 to 4, wherein the spoiler part (16) and/or the spoiler element (18) comprises at least one further spoiler element (18) movable connected to the spoiler part (16) or spoiler element (18).

6. Body according to anyone of claims 1 to 5, wherein the position of the spoiler element (18) is particularly automatic adaptable to the position of the spoiler part (16).

7. Body according to anyone of claims 1 to 6, wherein the spoiler part (16) comprises several spoiler elements (18) and/or the body (10) comprises several spoiler parts (16), wherein the several spoiler elements (18) and/or the several spoiler parts (16) are independently to each other movable.

8. Body according to anyone of claims 1 to 7, wherein the spoiler element (18) is linear moveable inside the spoiler part (16) by means of a lug (32) guided in a groove (34).

9. Body according to anyone of claims 1 to 8, wherein between the spoiler part (16) and the body (10) and/or between the spoiler part (16) and the spoiler element (18) a damping element, particularly a rubber-like material, is provided.

10. Body according to anyone of claims 1 to 9, wherein the spoiler part (16) is provided at a roof part (20) of the body (10) and/or at a trunk of the body (10) and/ or at a tailgate (46) of the body (10), particularly for providing a braking force, a down force, a stabilisation or a vortex.
